# EUROPEAN PATENT APPLICATION

(11) **EP 2 845 842 A1**
(43) Date of publication of application: **11.03.2015**
(21) Application number: 14181695.9
(22) Date of filing: 20.08.2014
(51) Int. Cl.: C04B 35/52

(54) **Carbon-carbon composites formed using pyrolysis oil and methods of forming the same**

(30) Priority: 09.09.2013 US 201314021728
(71) Applicant: Honeywell International Inc., Morristown, NJ 07962-2245 (US)
(72) Inventor: Michalakos, Peter M., Morristown, NJ New Jersey 07962-2245 (US); Lupton, Francis Stephen, Morristown, NJ New Jersey 07962-2245 (US)
(74) Representative: Houghton, Mark Phillip

(57) **Abstract**

A technique of forming a carbon-carbon composite material may include infusing pyrolysis oil into a porous preform, polymerizing at least some components of the pyrolysis oil infused in the preform to form a phenolic resin, and pyrolyzing the phenolic resin to form a partially densified preform. Carbon-carbon composites formed from porous preforms in which pyrolysis oil comprising a phenolic compound and at least one of an aldehyde or ketone compound is disposed in pores of the preform are also described.

## Description

### TECHNICAL FIELD

The present disclosure describes carbon-carbon composite materials and techniques for forming carbon-carbon composite materials.

### BACKGROUND

Some carbon-carbon composite bodies, such as some carbon-carbon composite brake disks that are used in the aerospace industry, may be manufactured from porous preforms. The porous preforms may be densified using one of several processes, for example, chemical vapor deposition/chemical vapor infiltration (CVD/CVI), vacuum/pressure infiltration (VPI), high pressure impregnation/carbonization (PIC), or resin transfer molding (RTM), which may introduce carbon into the porous preform.

### SUMMARY

The present disclosure describes carbon-carbon composite materials and techniques for forming carbon-carbon composite materials from porous preforms. In some examples, a technique includes infusing pyrolysis oil into a porous preform and polymerizing at least some components of the pyrolysis oil to form a phenolic resin. The pyrolysis oil may include a phenolic compound and at least one of an aldehyde or ketone compound, which may be polymerized to form the material including the phenolic resin. Polymerization of the phenolic compound and the at least one of the aldehyde or ketone may occur by heating the pyrolysis oil at relatively low temperatures over relatively short time periods, without the need for additional reagents, catalysts or special atmospheres. Polymerization of the at least some components of the pyrolysis oil may form the phenolic resin, which may have increased viscosity compared to pyrolysis oil, and may substantially prevent (e.g., prevent or nearly prevent) leaching, volatilization, and foaming before or during later processing of the infused preform, such as pyrolyzation of the material including the phenolic resin.

In some examples, the techniques described herein may include additional or alternative steps. For example, before infusion of pyrolysis oil or after pyrolyzation of the polymerized pyrolysis oil, a porous preform or partially densified preform may be infiltrated with a densifying agent using processes such as RTM, VPI, CVD/CVI, or PIC. The densifying agent may include, for instance, a high carbon yielding, high viscosity resin or pitch, or gaseous carbon. In some examples, a technique may additionally or alternatively include infusing a porous preform with a mixture of pyrolysis oil and, for example, pitch or resin. In some examples, pyrolysis oil may be treated, prior to being infused in the porous preform, to reduce the water, ash, metal and/or metal ion content in the pyrolysis oil.

In one example, the disclosure describes a method including infusing a pyrolysis oil into a porous preform. The method also may include polymerizing at least some components of the pyrolysis oil infused in the porous preform to convert the at least some components of the pyrolysis oil to a material including a phenolic resin. Additionally, the method may include pyrolyzing the phenolic resin to convert the phenolic resin to carbon and form a partially densified preform.

In another example, the disclosure describes an article comprising a porous preform including pores, and a pyrolysis oil is disposed in at least some of the pores of the porous preform. The pyrolysis oil may include a phenolic compound and at least one of an aldehyde or a ketone compound.

The details of one or more examples are set forth in the accompanying drawings and the description below. Other features, objects, and advantages will be apparent from the description and drawings, and from the claims.

### BRIEF DESCRIPTION OF DRAWINGS

FIG. 1 is a flow diagram illustrating an example technique for forming a partially densified preform.
FIG. 2 is a perspective view of an example porous preform that may be infused with pyrolysis oil.
FIG. 3 is a lateral cross-sectional view of an example porous preform.
FIG. 4 is a lateral cross-sectional view of an example porous preform infused with pyrolysis oil.
FIG. 5 is a lateral cross-sectional view of an example porous preform after polymerization of pyrolysis oil.
FIG. 6 is a chart showing viscosity of an example pyrolysis oil as a function of temperature and time.
FIG. 7 is a lateral cross-sectional view of an example partially densified preform, after pyrolyzation of the polymerized pyrolysis oil.
FIG. 8 is a flow diagram illustrating an example technique for forming a carbon-carbon composite body from a porous preform.
FIG. 9 is a lateral cross-sectional view of an example carbon-carbon composite body, after densification.
FIG. 10 is a chart showing an example infrared spectroscopy absorbance spectrum of an example material including a phenolic resin and an example infrared spectroscopy absorbance spectrum of a reference sample of cresol resol.

### DETAILED DESCRIPTION

The present disclosure describes composite materials and techniques for forming composite materials from porous preforms. Example composite materials include carbon-carbon composite materials, such as carbon-carbon composite brake discs. In some examples, techniques described herein include infiltrating a porous preform (e.g., a porous carbon preform or a porous preform including a carbon precursor material) with pyrolysis oil. When used to infiltrate the porous preform, the pyrolysis oil may be in liquid form with a relatively low viscosity, such that the pyrolysis oil may infiltrate pores of the porous preform. After the infiltration, the infiltrated preform may be heated at a temperature that facilitates polymerization of at least some components of the pyrolysis oil. The polymerization may form a material with an increased viscosity compared to the pyrolysis oil.

In some examples, the polymerization of at least some components of the pyrolysis oil takes place at relatively low temperatures and pressures and over relatively short time periods (without an extended stabilization period), and may not utilize any additional reagents. For example, the polymerization may be performed at a temperature between about 80°C and about 300°C, at standard atmospheric pressure, and may occur over a time period of less than about 48 hours. This may be a lower temperature and a shorter time period than used when forming carbon in a porous preform using CVD/CVI, which, in some examples, may utilize high temperatures (e.g., above 800°C), vacuum, and/or multiple cycles of up to 30 days each, to achieve desirable densities. Utilization of CVD/CVI processes also typically requires large capital investments in the chambers in which the CVD/CVI is performed.

In some examples, the polymerized components of the pyrolysis oil include a phenolic resin. As noted, the polymerized components of the pyrolysis oil may remain disposed substantially within the preform until a high temperature carbonization step converts at least the polymerized components of the pyrolysis oil to carbon. In some examples, after carbonization of at least the polymerized components of the pyrolysis oil, the partially densified preform may be infused with pyrolysis oil, components of the pyrolysis oil polymerized, and at least the polymerized components of the pyrolysis oil carbonized to further increase the density of the porous preform. Additionally or alternatively, in some examples, one or more resins or pitches may be mixed with the pyrolysis oil prior to infusion of the pyrolysis oil into the porous preform.

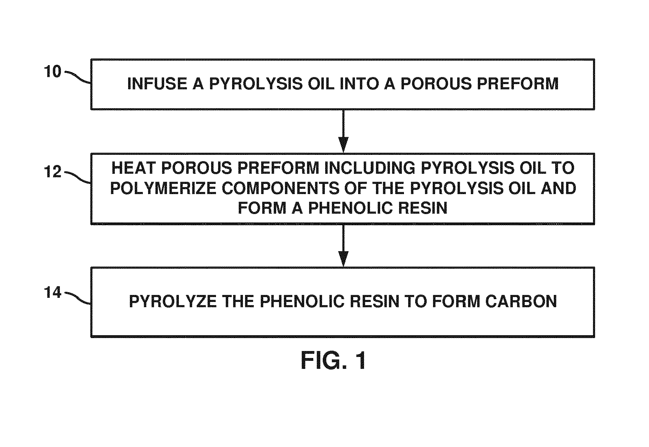

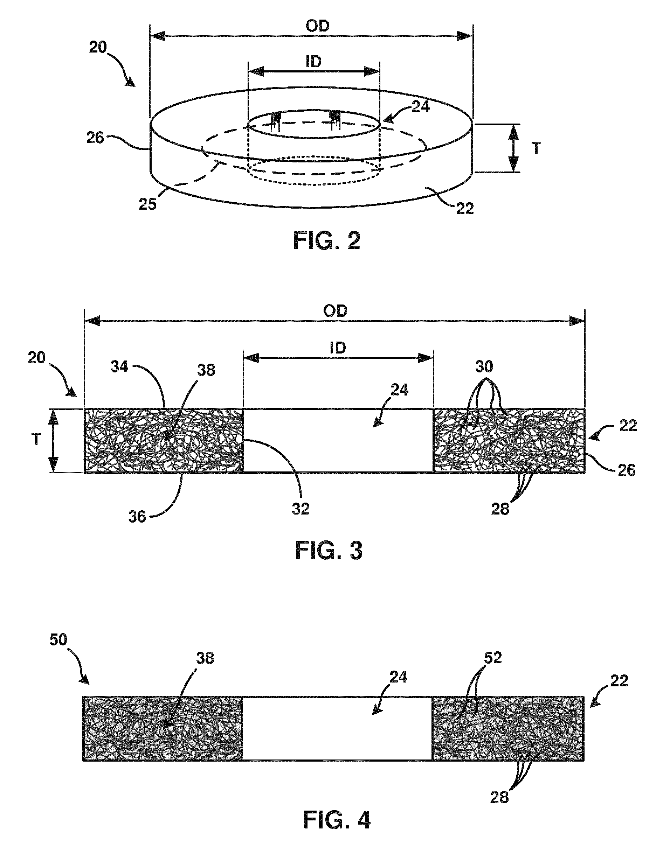

FIG. 1 is a flow chart illustrating an example technique for forming a partially densified preform. In some examples, the partially densified preform may subsequently be used to form a carbon-carbon composite material, such as a carbon-carbon composite brake disk. The technique of FIG. 1 will be described with reference to the conceptual diagrams of FIGS. 2-5 and 7, which show different views of an example porous preform at different steps during the technique of FIG. 1 and a partially densified preform resulting from the technique of FIG. 1. Although an example porous preform 20 is depicted in FIGS. 2 and 3, the technique of FIG. 1 can be used with different preforms of other types (e.g., shapes or material compositions), and can be used to form partially densified preforms having different shapes or material compositions.

The technique of FIG. 1 includes infusing (e.g., injecting) a pyrolysis oil into a porous preform (10). FIG. 2 is a perspective view of an example porous preform 20 that may be used in the technique of FIG. 1. Examples of preforms that may be used as porous preform 20 include, but are not limited to: a fibrous preform, such as a woven fiber preform, a nonwoven fiber preform, a chopped-fiber and binder preform, a binder-treated random fiber preform, a carbon fiber preform, a ceramic fiber preform, a foam preform, a porous carbon body preform, or a porous ceramic body preform. In some examples, porous preform 20 includes a plurality of mechanically bound layers, which can be, for example, a plurality of fibrous layers, such as a plurality of woven or nonwoven fabric layers, connected together, e.g., bound by a binder, such as a resin binder, or via needle-punching of the plurality of layers. Alternatively, porous preform 20 does not include predefined layers, but, rather, can be formed from a bundle of fibers that are mechanically bound together, e.g., via needling. A combination of any of the aforementioned types of preforms can be used.

In some examples, porous preform 20 is formed using carbon fibers. In others, porous preform 20 may be formed using a carbon fiber precursor material, such as polyacrylonitrile (PAN) fibers, which are subsequently pyrolyzed to form carbon fibers. In some examples, the carbon fiber precursor material may be pyrolyzed before infusing the pyrolysis oil into porous preform 20 (10). In other examples, the carbon fiber precursor material may not be pyrolyzed before infusing the pyrolysis oil into porous preform 20 (10), and the carbon fiber precursor may be converted to carbon fiber when the material including a phenolic resin (formed from polymerizing components of the pyrolysis oil) is pyrolyzed to carbon (14).

In some examples, as shown in FIG. 2, porous preform 20 may have a generally disc-shaped geometry so that a carbon-carbon composite material formed from porous preform 20 may be generally disc-shaped, e.g., for use as a brake disc. In other examples, porous preform 20 may define a different geometry. For example, the geometry of porous preform 20 may be similar to or substantially the same as the desired geometry for the finished part formed by the carbon-carbon composite material.

Porous preform 20 comprises a disc-shaped porous body 22 with a central bore 24 extending through an axial thickness of disc-shaped porous body 22. In one example, porous preform 20 has an inner diameter ID at bore 24, an outer diameter OD at an outer edge 26, and an axial thickness T, which is measured in a direction substantially orthogonal to the direction in which inner diameter ID and outer diameter OD are measured.

FIG. 3 is a conceptual diagram illustrating a lateral cross-sectional view of an example of porous preform 20 shown in FIG. 2, which is taken along a diameter of porous preform 20. Porous body 22 of porous preform 20 may include, for example, a plurality of fibers 28 that define a plurality of pores 30 within porous body 22. The porosity of porous body 22 extends substantially throughout the thickness T of porous body 22. As described above, fibers 28 may be bound together by a binder, fibers 28 may be formed into a plurality of fibrous layers (not shown) that are bound or needle-punched together, or fibers 28 may be mechanically joined, e.g., using needle-punching, without previously being formed into distinct fibrous layers. Fibers 28 and pores 30 are not necessarily shown to scale, but rather are shown conceptually in order to illustrate aspects of the present disclosure.

As described above, the technique of FIG. 1 includes infusing a pyrolysis oil into porous preform 20 (10). In some examples, the pyrolysis oil of this disclosure includes low-viscosity, complex organic liquid materials. Pyrolysis oil may be free-flowing when fresh, and, in some examples, may be infused into porous preform 20 (10) without heating. In other examples, aged pyrolysis oil with increased viscosity may be heated to aid infusion into porous preform 20 (10). Pyrolysis oil may be produced by pyrolysis of biomass material. For example, pyrolysis oil may be formed by pyrolyzing woody biomass, such as hardwood, softwood, angiospermae trees, gymnospermae trees, hardwood bark, or softwood bark. As other examples, pyrolysis oil may be formed by pyrolyzing other biomass, such as corn fiber, bagasse, other lignocellulosic feedstock, straw, nuts, seeds, algae, miscanthus, switchgrass, or sorghum. Pyrolysis oil may also be produced by the pyrolysis of cellulosic residuals from the forestry, paper and pulp, construction and demolition, and agricultural sectors, such as bark, sawdust, lignin material, wood, waste, or straw.

Pyrolysis oil may include a mixture of components (e.g., organic liquid components), including at least one phenolic compound and at least one aldehyde and/or ketone. In some examples, pyrolysis oil includes a mixture of phenolic, aldehyde, and ketone compounds. The phenolic compound may include, for example, phenol or a polyphenol, and, in some examples, may include one or more substituents bonded to the non-hydroxyl group positions of the aromatic hydrocarbon.

In some examples, the organic liquid materials may be composed of organic acids (including phenols) and other oxygenates (such as aldehydes and/or ketones), traces of alkalis, and up to 25% water. For example, pyrolysis oil may include a complex mixture of water, guaiacols, catecols, syringols, vanillins, furancarboxaldehydes, isoeugenol, pyrones, acetic acid, formic acid, and other carboxylic acids. Pyrolysis oil also may contain other compounds, including hydroxyaldehydes, hydroxyketones, sugars, dehydrosugars, and phenolic compounds. In some examples, pyrolysis oil may also include oligomeric species, which may be derived from lignin or cellulose. Pyrolysis oil also may be referred to as, for example, py oil, pyrolysis liquid, biofuel, bio-oil, bio-crude oil (BCO), wood oil, wood distillates, wood liquids, liquid wood, liquid smoke, and pyroligneous acid.

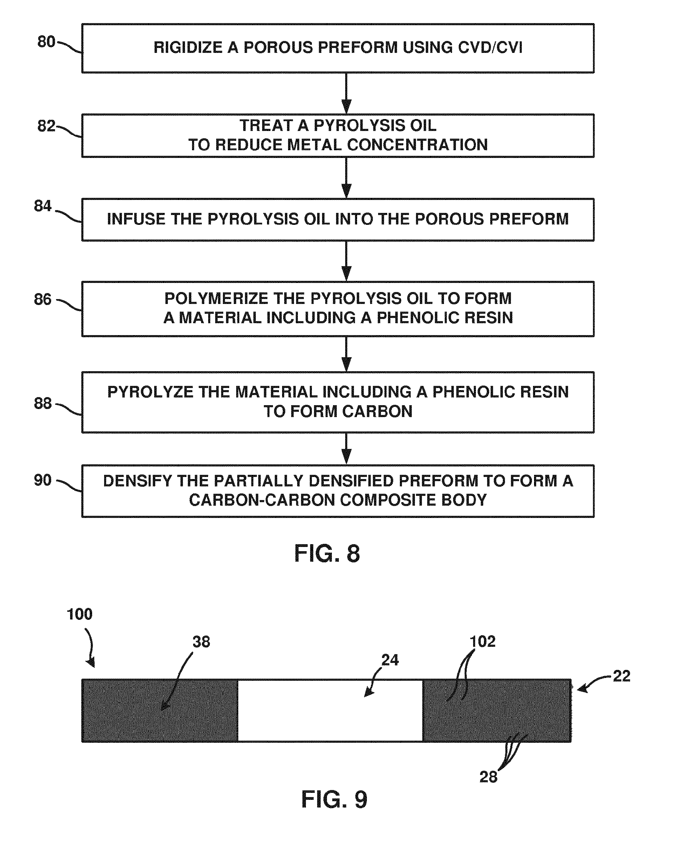

The process of pyrolyzing biomass may include, for example, converting organics in the biomass to solids, liquids, vapors, aerosols, and/or gases by heating biomass in the absence or near absence of oxygen, then rapidly cooling and condensing the vapor, aerosol and/or gas which produces the pyrolysis oil. Pyrolysis oil may be formed using a variety of pyrolysis techniques. The residence time of the pyrolysis, the heating rate, and temperature to which the biomass is heated may vary depending on the particular process. Additionally, the precise mixture of components in the pyrolysis oil may at least partially depend upon the residence time, the heating rate, and temperature. Example pyrolysis techniques include conventional pyrolysis, which may include a residence time of between about 5 and about 30 minutes, a low heating rate, and a temperature of about 600°C; fast pyrolysis, which may include a residence time on the order of seconds, a very high heating rate, and a temperature of about 650°C; flash-liquid pyrolysis, which may include a residence time of less than about 1 second, a high heating rate, and a temperature of less than about 650°C; flash-gas pyrolysis, which may include a residence time of less than about 1 second, a high heating rate, and a temperature of less than about 650°C; ultra pyrolysis, which may include a residence time of less than about 0.5 second, a very high heating rate, and a temperature of about 1000°C; vacuum pyrolysis, which may include a residence time of between about 2 seconds and about 30 seconds, a medium heating rate, and a temperature of about 400°C; hydro-pyrolysis, which may include a residence time of less than about 10 seconds, a high heating rate, and a temperature of less than about 500°C; and methano-pyrolysis, which may include a residence time of less than about 10 seconds, a high heating rate, and a temperature of greater than about 700°C. Further details regarding some types of pyrolysis oil may be found in Mohan; Pittman, Jr.; Steele, Pyrolysis of Wood/Biomass for Bio-oil: A Critical Review, Energy & Fuels, Vol. 20, No. 3 (American Chemical Society 2006), the entire content of which is incorporated herein by reference. In some examples, the concentration of any water, ash, metals and/or metal ions in the pyrolysis oil, for example alkali metals, alkaline earth metals or transition metals, can be reduced prior to infusion of the pyrolysis oil in the porous preform 20 (10), as described with reference to the technique of FIG. 8.

In some examples, infusing the pyrolysis oil precursor into porous preform 20 (10) includes infusing the pyrolysis oil at least to a predetermined depth within porous preform 20. As used herein, "predetermined depth" may refer to an absolute or relative depth from outer edges of porous body 22, such as from outer edge 26, from inner edge 32 (e.g., an inner edge 32 that defines bore 24), from upper edge 34, and from lower edge 36. In some examples, infusing the pyrolysis oil into porous preform 20 (10) includes infusing the pyrolysis oil to a relative depth of at least about 15% from each of the edges 26, 32, 34, and 36 (e.g., at least about 15% of the difference between inner diameter ID and outer diameter OD infused from each of outer edge 26 and inner edge 32, and at least about 15% of thickness T infused from each of upper edge 34 and lower edge 36). In other examples, infusing the pyrolysis oil into porous preform 20 (10) includes infusing the pyrolysis oil to a relative depth of at least about 25% from edges 26, 32, 34, 36, such as at least about 30% from edges 26, 32, 34, 36; or at least about 40% from edges 26, 32, 34, 36; or about at least about 45% from edges 26, 32, 34, 36.

In some examples, infusing the pyrolysis oil into porous preform 20 (10) may include infusing the pyrolysis oil substantially throughout the entire porous preform body 22 so that an inner portion 38 of porous preform body 22 is substantially filled with the pyrolysis oil. The term "inner portion" may refer to a generally geometrically-centered region within body 22, wherein the inner portion has a volume that is a predetermined percentage of the total volume of the preform, such as between about 15% and about 50% of the volume of the preform, such as between about 20% and about 30% of the volume of the preform.

As an example, for a generally annular preform, such as the example preform 20 shown in FIG. 2, a geometric center of preform body 22 will generally be an annulus 25 (FIG. 2) that is generally axially centered within porous preform body 22, e.g., generally centered within thickness T, and that is generally radially centered within porous preform body 22, e.g., generally centered between inner diameter ID at inner edge 32 and outer diameter OD at outer edge 26. By way of example, an "inner portion" may be defined as a predetermined percentage of the radius of porous preform body 22 on either side of center annulus 25, such as at least about 50% of the radius (e.g., at least about 25% of the radius of center annulus 25 on either side of center annulus 25), for example at least about 30% of the radius (e.g., at least about 15% of the radius on either side of center annulus 25), such as at least about 20% of the radius (e.g., at least about 10% of the radius on either side of center annulus 25), for example at least about 15% of the radius (e.g., at least about 7.5% of the radius on either side of center annulus 25). In another example, preform body 22 comprises a plurality of fibrous layers bonded, laminated, or needle-punched together, and inner portion 38 may comprise a predetermined number of inner layers of the plurality of layers on either side of a generally axially centered layer. In one example, the precursor is infused substantially throughout the entire porosity of porous body 22.

The pyrolysis oil may be infused into porous preform body 22 using any suitable technique. In some examples, the pyrolysis oil is infused into porous preform body 22 using vacuum pressure infiltration (VPI). VPI may include immersing porous preform body 22 in the pyrolysis oil and subjecting porous preform 20 and the pyrolysis oil to a vacuum, such that the liquid precursor wicks into porous preform body 22. In one example, vacuum infiltration may be performed at room temperature (e.g., between about 20 °C (about 68 °F) and about 25 °C (about 77 °F)). In another example, porous preform body 22 may be heated, e.g., up to a temperature of about 40 °C (about 105 °F), to aid infusion of the pyrolysis oil into pores 30 within inner portion 38, or in some examples, throughout pores 30 of substantially the entire porous preform body 22.

In other examples, the pyrolysis oil is infused into porous preform body 22, using resin transfer molding (RTM), in which pyrolysis oil is infused into porous preform body 22 through application of heat and pressure. In some examples, porous preform body 22 may be rigidized by one or more CVD/CVI cycles prior to infusion of pyrolysis oil using RTM.

In some examples, the pyrolysis oil includes a material or materials with a viscosity that is sufficiently low so that the pyrolysis oil can be infused substantially throughout the entire volume of porous preform body 22, e.g., so that the pyrolysis oil is infused at least to a predetermined depth within preform 20 or so that the pyrolysis oil is infused substantially into inner portion 38 of body 22. The pyrolysis oil may be, for example, relatively non-viscous. In one example, the viscosity of the pyrolysis oil is between about 4 centipoise and about 100 centipoise, for example between about 4 centipoise and about 50 centipoise, such as about 4.5 centipoise.

After infiltration, the pyrolysis oil is disposed in at least some of pores 30. FIG. 4 is a lateral cross-sectional view of an example infiltrated porous preform 50 infused with pyrolysis oil. As shown in FIG. 4, in some examples, pores 30 (FIG. 3) substantially throughout (e.g., throughout or nearly throughout) the volume of porous preform body 22 are at least partially filled with pyrolysis oil 52. In some examples, substantially all (e.g., all or nearly all) pores 30 within porous preform body 22 may be substantially filled (e.g., filled or nearly filled) with pyrolysis oil 52. In other examples, at least some of pores 30 may be at least partially filled with pyrolysis oil 52, and at least some of pores 30 may remain unfilled with pyrolysis oil.

After infusing pyrolysis oil into porous preform 20 to form infiltrated porous preform 50 (10), infiltrated porous preform 50 may be heated at a temperature that facilitates polymerization of one or more components of the pyrolysis oil 52 (12). For example, the at least one phenolic compound and the at least one aldehyde and/or ketone compound may react to form a phenolic resin. Reactions 1 and 2 illustrate two example types of reactions between phenolic compounds and aldehyde/ketone compounds to form phenolic resins.

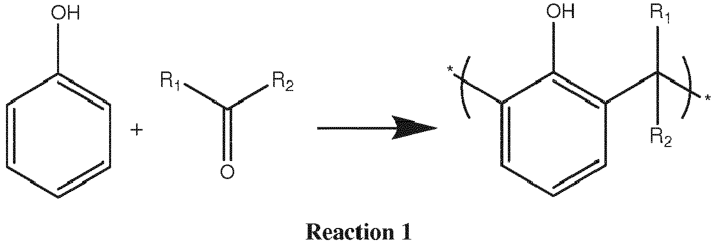

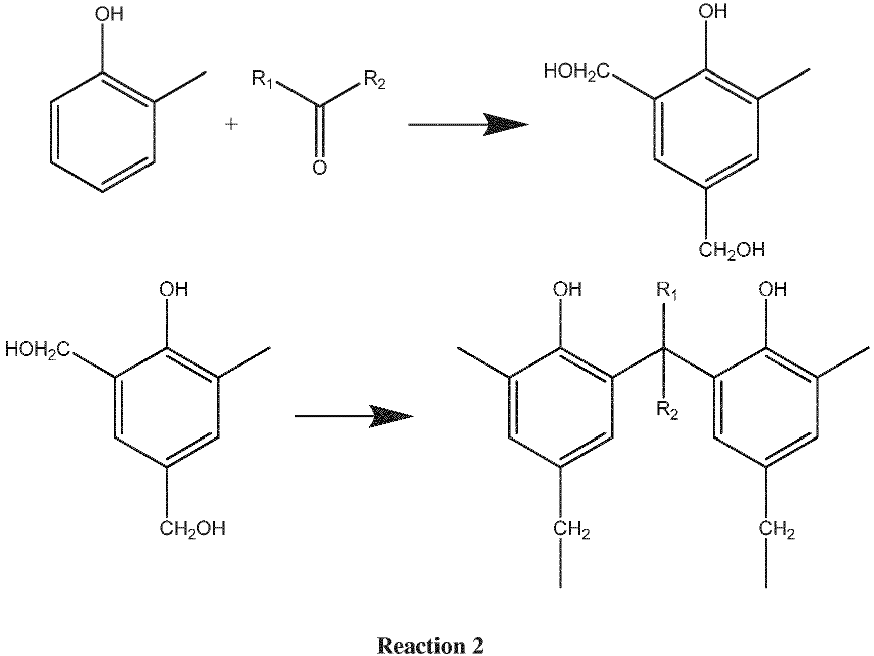

As shown in Reaction 1, a phenol and a ketone (where R₁ and R₂ are hydrocarbons) or aldehyde (where at least one of R₁ or R₂ is hydrogen) may react to form a linear phenolic resin. Although not shown in Reaction 1, in some examples, Reaction 1 alternatively or additionally may form a crosslinked phenolic resin, in which additional sites on the phenol ring react with the aldehyde and/or ketone. As another example, Reaction 2 illustrates a set of reactions in which a substituted phenol and a ketone or aldehyde react to form a crosslinked phenolic resin. Potential crosslinking sites are indicated by the carbon groups extending from the phenol rings. Reactions of other phenolic compounds and an aldehyde and/or ketone may be similar to or substantially the same as the reactions shown in Reactions 1 and 2, depending on the particular chemical structure of the phenolic compound and aldehyde and/or ketone.

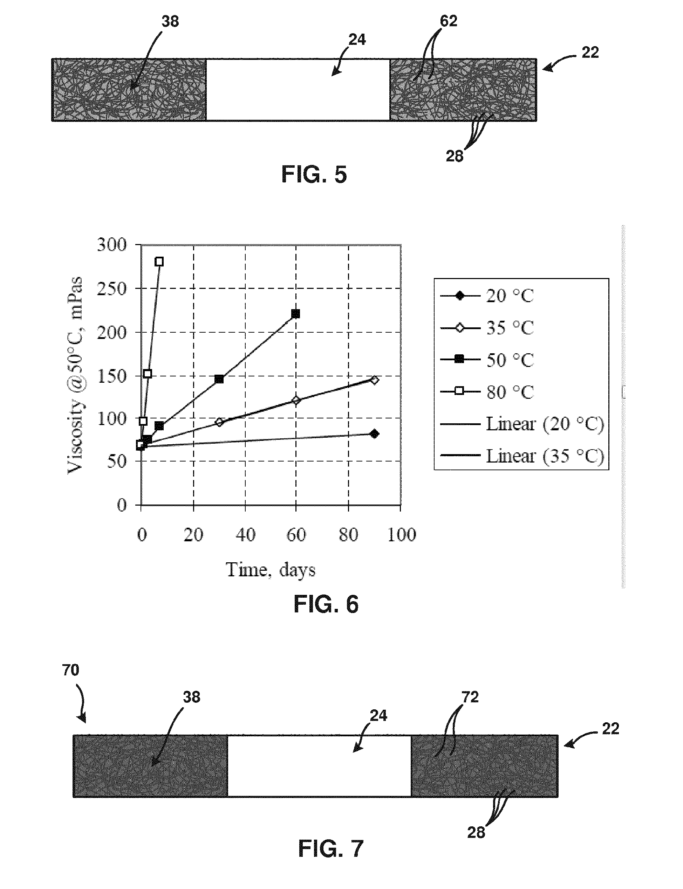

FIG. 5 is a lateral cross-sectional view of an example porous preform after polymerization of the one or more components of pyrolysis oil 52 (12). As shown in FIG. 5, in some examples, pores 30 (FIG. 3) substantially throughout (e.g., throughout or nearly throughout) the volume of porous preform body 22 are at least partially filled with phenolic resin 62. In some examples, substantially all (e.g., all or nearly all) pores 30 within porous preform body 22 is substantially filled (e.g., filled or nearly filled) with phenolic resin 62. In other examples, at least some of pores 30 is at least partially filled with phenolic resin 62, and at least some of pores 30 may remain unfilled with phenolic resin 62. In some examples, the pores 30 at least partially filled with phenolic resin 62 may substantially correspond to (e.g., correspond to or nearly correspond to) the pores 30 in which pyrolysis oil 52 was disposed.

As the phenolic compound and aldehyde and/or ketone react and form a phenolic resin 62, the viscosity of the material in pores 30 may increase, e.g., become more viscous than pyrolysis oil 52. FIG. 6 is a chart showing viscosity of an example pyrolysis oil as a function of temperature and time. The chart displays trends of increased viscosity of pyrolysis oil (measured in millipascal-seconds, or centipoise) with both the passage of time (measured in days) and increased temperature (measured in degrees Celsius). As shown in FIG. 6, separate samples of example pyrolysis oil were maintained at temperatures of 20 °C, 35 °C, 50 °C, and 80 °C, respectively, for periods of days. The respective representative viscosities of the samples of pyrolysis oil were measured at distinct points in time at a temperature of 50 °C. The change in viscosity of the samples of example pyrolysis oil as a function of temperature and time is set forth in the chart, which was obtained from Oasmaa; Peacocke, A Guide to Physical Property Characterisation of Biomass-Derived Fast Pyrolysis Liquids, VTT Publications, Vol. 450 (Espoo 2001). The increased viscosity of the phenolic resin 62 compared to the pyrolysis oil 52 may reduce the tendency of material to leak, foam, and/or volatilize before or during subsequent handling and processing of the preform.

In some examples, polymerization of at least some components of pyrolysis oil 52 may occur without the introduction of additional reagents, catalysts, or special atmospheres (e.g., vacuum or an inert atmosphere), allowing for a more efficient and economical cost of production compared to methods that require a special atmosphere and/or additional reagents or catalysts. In some examples, polymerization of pyrolysis oil 52 may utilize only heating of infiltrated porous preform 50, and may utilize relatively low temperatures. For example, infiltrated porous preform 50 may be heated at a temperature of between about 80°C and about 300°C, depending, for example, on the composition of the pyrolysis oil, such as between about 150°C and about 200°C, to form phenolic resin 62. In some examples, infiltrated porous preform 50 may be heated at the temperature for less than about 48 hours, such as less between about 1 hour and about 48 hours, less than about 12 hours, or about 12 hours, to facilitate polymerization of the phenolic compound and the aldehyde and/or ketone compound. Further, in some cases, heating infiltrated porous preform 50 at a temperature within these ranges includes heating the infiltrated porous preform to the temperature at which it is being heated (i.e., in some examples, infiltrated porous preform 50 may reach a substantially similar temperature as the temperature of its surroundings during the heating process).

As pyrolysis oil 52 may include other components in addition to the phenolic compound and the aldehyde and/or ketone, the other components may also undergo reactions and/or may vaporize and be removed from infiltrated porous preform 50 during the heating process. For example, any aqueous phase may boil off. Because at least some of the other components in pyrolysis oil 52 may remain in pores 30 after heating of the infiltrated porous preform 50 (12), pores 30 may contain a material including a phenolic resin 62 after the heating step (12). In some examples, polymerization of pyrolysis oil 52 in infiltrated porous preform 50 prior to pyrolyzation may result in higher densities and yields of the final pyrolyzed product, as compared to pyrolyzation of pyrolysis oil 52 without prior polymerization to form a material including a phenolic resin.

The technique of FIG. 1 further includes pyrolyzing phenolic resin 62 to form carbon (14). To pyrolyze phenolic resin 62, infiltrated porous preform 50 including phenolic resin 62 may be heated at a temperature between about 200°C and about 800°C to form a partially densified preform 70 (14). The temperature at which infiltrated porous preform 50 including phenolic resin 62 is heated may depend upon, for example, the composition of the phenolic resin. In some examples, infiltrated porous preform 50 including phenolic resin 62 may be heated at a temperature between about 500°C and about 800°C, such as about 700°C to form a partially densified preform 70 (14). Further, in some examples, heating infiltrated porous preform 50 including phenolic resin 62 at a temperature within these ranges includes heating the infiltrated porous preform 50 including phenolic resin 62 to the temperature at which it is being heated (i.e., in some examples, infiltrated porous preform 50 including phenolic resin 62 may reach a substantially similar temperature as the temperature of its surroundings during the heating process).

In some examples, the pyrolyzation is performed under partial vacuum conditions or an inert atmosphere. FIG. 7 is a lateral cross-sectional view of an example partially densified preform 70, after polymerization of pyrolysis oil 52 (FIG. 4) and pyrolyzation of phenolic resin 62 (FIG. 5). As shown in FIG. 7, carbon 72 may be disposed in pores 30 (FIG. 3) in which the material including the phenolic resin was disposed prior to pyrolyzation of the material including the phenolic resin. Hence, in some examples, carbon 72 may be disposed substantially throughout (e.g., throughout or nearly throughout) the volume of partially densified preform 50. In other examples, carbon 72 may be disposed at least partially throughout the volume of partially densified preform 70.

Although not shown in FIG. 1, in some examples, partially densified preform 70 may be cured at a temperature between about 1200°C and about 2450°C following pyrolyzation. In some examples, curing partially densified preform 70 at a temperature within this range includes heating the partially densified preform to the temperature at which it is being heated (i.e., in some examples, partially densified preform 70 may reach a substantially similar temperature as the temperature of its surroundings during the curing process). In some examples, the curing step substantially prevents (e.g., prevents or nearly prevents) any structural change or chemical reaction within partially densified preform 70 at temperatures at least as high as this range after the curing step.

In some examples, carbon 72 formed by pyrolyzing phenolic resin 62 is porous. In some instances, after pyrolyzing phenolic resin 62 to form carbon 72, the technique of FIG. 1 may be repeated, and pyrolysis oil 52 may be infused in at least some of the pores of a porous carbon 72 (10), components of pyrolysis oil 52 may be polymerized to form phenolic resin 62, (12), and phenolic resin 62 may be pyrolyzed to form additional carbon 72, further increasing the density of partially densified preform 70.

In other examples, the carbon 72 formed by pyrolyzing phenolic resin 62 is substantially non-porous. In some examples, the porosity of the carbon 72 may be affected by the pyrolyzation temperature, and a higher pyrolyzation temperature may result in a more porous carbon 72. Hence, a porous preform may be at least partially densified using infiltrating of the preform with pyrolysis oil, polymerization of at least some components of the pyrolysis oil to form a phenolic resin, and pyrolyzation of the phenolic resin to form carbon in pores of the porous preform.

FIG. 8 is a flow diagram illustrating an example technique for forming a carbon-carbon composite body from a porous preform. The technique of FIG. 8 incorporates the steps of the technique of FIG. 1 for forming a partially densified porous preform, and includes additional, optional processing steps that may be used to form a carbon-carbon composite body or material, such as a carbon-carbon composite brake disk. The steps of FIG. 8 can be performed in different orders than shown in FIG. 8, different combinations, and/or can be optional. For example, the rigidization (80) and densification (90) steps may or may not be performed in the specified order, or at all.

In some examples, in the technique of FIG. 8 includes, prior to infusing porous preform 20 with pyrolysis oil (84), rigidizing porous preform 20 using CVD/CVI (80). CVD/CVI may rigidize porous preform 20 by depositing a thin layer of carbon on at least some of fibers 28 of porous preform 20.

In some examples, the technique shown in FIG. 8 may optionally include treating a pyrolysis oil to reduce metal or metal ion content in the pyrolysis oil (82), in addition to or as an alternative to rigidizing porous preform 20 (80). In some examples, pyrolysis oil 52 may contain metals or metal ions, such as alkali metals, alkaline earth metals, or transition metals. The amount of metals or metal ions in pyrolysis oil 52 may depend upon the feedstock from which pyrolysis oil 52 was formed and the technique used to form pyrolysis oil 52. In some examples, the total metal concentration in biomass-derived pyrolysis oil may range from, for example, about 0.02 weight percent to about 0.5 weight percent, but may be present in larger or smaller amounts.

In some examples, pyrolysis oil 52 may be treated prior to infusing pyrolysis oil 52 into porous preform 20 to reduce the concentrations of metals or metal ions in pyrolysis oil 52 (82). One technique of reducing metals in pyrolysis oil 52 includes contacting the metal- or metal ion-containing pyrolysis oil with an acidic ion-exchange resin having sulfonic acid groups to produce low metal pyrolysis oil and spent ion-exchange resin. The low metal pyrolysis oil in this instance may be removed from the spent ion-exchange resin. The spent acidic ion-exchange resin may also be washed with a solvent, such as a solvent selected from the group consisting of methanol, ethanol, acetone, and combinations thereof, to remove at least a portion of residual low metal pyrolysis oil from the spent acidic ion-exchange resin. In some examples, this technique may remove substantially all (e.g., all or nearly all) alkali metals (for example, sodium, potassium, and cesium) and alkaline earth metals (magnesium, calcium and strontium) from pyrolysis oil. Transition metals (for example, Fe, Ni, and Mn) and other metals also may be at least partially removed from the pyrolysis oil. Further details regarding treatment of pyrolysis oil to reduce the metal or metal ion content of pyrolysis oil may be found at U.S. Patent Application Publication No. 2011/0146135 by Brandvold, which is entitled, "LOW METAL BIOMASS-DERIVED PYROLYSIS OILS AND PROCESSSES FOR PRODUCING THE SAME," the entire content of which is incorporated herein by reference.

Alternatively or additionally, in some examples, pyrolysis oil 52 may be treated prior to infusing pyrolysis oil 52 into porous preform 20 to reduce the concentrations of water or ash in the pyrolysis oil. An example technique of removing or reducing the concentration of water from pyrolysis oil 52 includes vacuum drying the pyrolysis oil at temperatures below 100 °C, for example, between about 40 °C and about 60 °C, or at about 40 °C. Pyrolysis oil 52 may alternatively or additionally be treated for removal or reduction of ash content prior to infusion into porous preform 20 by, for example, filtering out any ash by passing the pyrolysis oil through a metal or ceramic filter having pores of a size sufficient to remove or reduce the concentration of the ash content.

The technique of FIG. 8, like that of FIG. 1, includes infusing (e.g., injecting) a pyrolysis oil into porous preform 20 (84), heating infiltrated porous preform 50 at a temperature that facilitates polymerization of one or more components of the pyrolysis oil (86), and pyrolyzing the phenolic resin to form carbon (88). Details regarding these steps are described above with reference to steps (10), (12), and (14), respectively, of FIG. 1.

Additionally and optionally, the technique of FIG. 8 may also include further densifying the partially densified preform to form a carbon-carbon composite body 100 (90). FIG. 9 is a lateral cross-sectional view of an example carbon-carbon composite body 90, after densification. Densifying the porous preform or partially densified preform (90) may include infiltrating one or more densifying agents 102 into pores of carbon formed by pyrolyzing the phenolic resin 72 (90). The infiltration may be accomplished using at least one or more of the processes as described herein, for example, CVD/CVI, VPI, PIC, or RTM, which may introduce carbon, additional carbon, or carbon precursors into the partially densified preform 70 (FIG. 7). The densifying agent 102 may include at least one of gaseous carbon, a high carbon yielding, high viscosity carbon resin or pitch comprising at least one of a derivative of coal tar precursor, a derivative of a petroleum precursor, a derivative of a synthetic pitch precursor, a synthetic pitch, a coal tar pitch, a petroleum pitch, a mesophase pitch, or a high char-yield thermoset resin. Such materials when in the form of carbon precursors may be pyrolyzed to form carbon. In some examples, carbon-carbon composite body 100 may comprise a generally annular shaped carbon-carbon composite brake disk, although other shapes and applications may be utilized.

### EXAMPLE

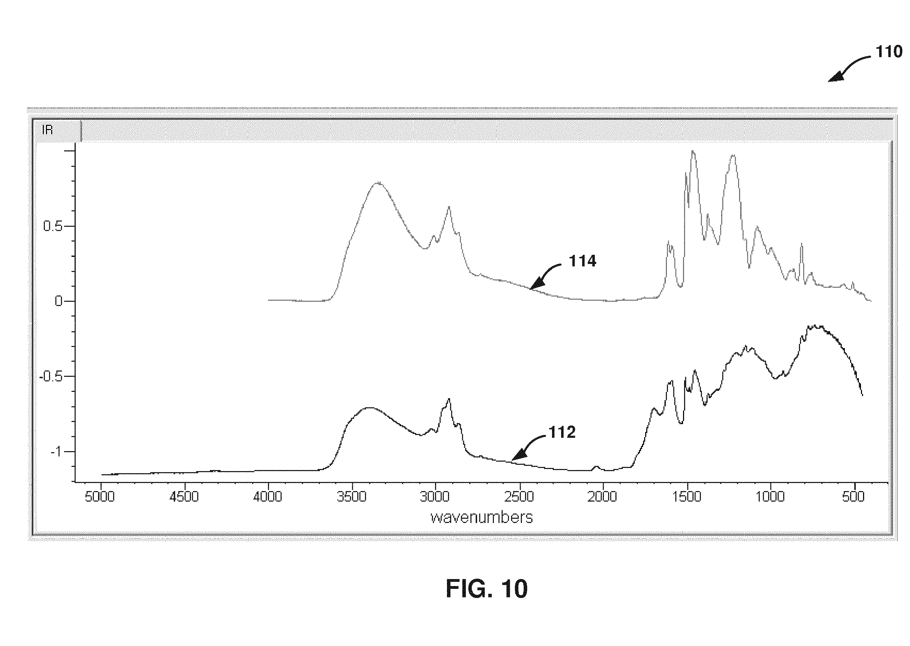

FIG. 10 is a chart 110 showing an example infrared spectroscopy absorbance spectrum of an example material including a phenolic resin 112 and an example infrared (IR) spectroscopy absorbance spectrum of a reference sample of cresol resol 114. As shown in FIG. 10, the units of the x-axis of the chart are wavenumbers, while the y-axis shows absorbance in generic units. The example material including a phenolic resin was a sample of polymerized pyrolysis oil from a reactor processing pyrolysis oil at an elevated temperature (about 250°C). The reference sample of cresol resol was a sample of HPX #813, cresol resol (92-94% solid resin). Spectra 112 and 114 were taken using an IR spectrometer. The example material including the phenolic resin was formed by polymerization of a pyrolysis oil produced from sawdust of white oak from sawmill cutting. As shown in FIG. 10, the spectrum of the example material including a phenolic resin 112 is consistent with the spectrum of a reference sample of cresol resol 114, and spectrum 112 displays peaks consistent with a phenolic resin compound.

Various examples have been described. These and other examples are within the scope of the following claims.

## Claims

1. A method comprising:
infusing a pyrolysis oil into a porous preform;
polymerizing at least some components of the pyrolysis oil infused in the porous preform to convert the at least some components of the pyrolysis oil to a phenolic resin; and
pyrolyzing the phenolic resin to convert the phenolic resin to carbon and form a partially densified preform.

2. The method of claim Error! Reference source not found., further comprising:
infiltrating the partially densified preform with a densifying agent using at least one of resin transfer molding or vacuum pressure infiltration; and
pyrolyzing the densifying agent to form a carbon-carbon composite body.

3. The method of claim 2, wherein the densifying agent comprises at least one of a high carbon yielding, high viscosity resin or pitch comprising at least one of a derivative of coal tar precursor, a derivative of a petroleum precursor, a derivative of a synthetic pitch precursor, a synthetic pitch, a coal tar pitch, a petroleum pitch, a mesophase pitch, or a high char-yield thermoset resin.

4. The method of any one of claims 1 to 3, wherein, at the time and temperature at which the pyrolysis oil is infused into the porous preform, the pyrolysis oil has a viscosity that permits infusion of the pyrolysis oil substantially throughout a volume of the preform.

5. The method of any one of claims 1 to 4, further comprising, prior to infusing the pyrolysis oil into the porous preform, rigidizing the porous preform using at least one of chemical vapor deposition or chemical vapor infiltration.

6. The method of any one of claims 1 to 5, wherein infusing the pyrolysis oil into the porous preform comprises infusing pyrolysis oil mixed with at least one of a carbon pitch or resin into the porous preform.

7. The method of any one of claims 1 to 6, wherein the pyrolysis oil comprises a phenolic compound and at least one of an aldehyde or a ketone compound.

8. The method of any one of claims 1 to 7, further comprising:
infusing a pyrolysis oil into pores of the partially densified preform;
polymerizing the pyrolysis oil infused in the partially densified preform to convert at least some components of the pyrolysis oil to a phenolic resin;
pyrolyzing the phenolic resin to convert the phenolic resin to carbon.

9. An article comprising:
a porous preform comprising pores; and
a pyrolysis oil disposed in at least some of the pores of the porous preform,
wherein the pyrolysis oil comprises a phenolic compound and at least one of an aldehyde or a ketone compound.

10. The article of claim 9, further comprising at least one of a pitch or resin disposed in at least some of the pores of the porous preform, wherein the at least one of the pitch or resin is mixed with the pyrolysis oil.
